# EUROPÄISCHE PATENTSCHRIFT

(11) **EP 2 029 412 B1**
(45) Veröffentlichungstag und Bekanntmachung des Hinweises auf die Patenterteilung: **30.09.2009**
(21) Anmeldenummer: 07729526.9
(22) Anmeldetag: 25.05.2007
(51) Int. Cl.: B61L 27/00

(54) **VERFAHREN ZUR ÜBERTRAGUNG VON DATEN**
METHOD FOR TRANSFERRING DATA
PROCÉDÉ POUR LA TRANSMISSION DE DONNÉES

(30) Priorität: 22.06.2006 DE 102006028686
(43) Veröffentlichungstag der Anmeldung: 04.03.2009
(73) Patentinhaber: SIEMENS AKTIENGESELLSCHAFT, 80333 München (DE)
(72) Erfinder: RIEMER, Thorsten, 91083 Baiersdorf (DE); SCHMIDT, Rudolf, 96172 Mühlhausen (DE)
(86) Internationale Anmeldenummer: PCT/EP2007/055097
(87) Internationale Veröffentlichungsnummer: WO 2007/147700

(56) Entgegenhaltungen:
- EP-A- 1 370 054
- EP-A- 1 496 719
- EP-A2- 1 209 928
- DE-A1-102004 042 308
- DE-A1-102004 049 752
- "Railway antennas application note" INTERNET CITATION, [Online] Oktober 2004 (2004-10), XP002384417 Gefunden im Internet: URL:http://www.hubersuhner.com/hs-p-rf-ant -rail_application_note_en.pdf> [gefunden am 2006-06-07]

## Beschreibung

Die Erfindung betrifft ein Verfahren zur Übertragung von Daten, insbesondere zwischen einem Schienenfahrzeug und einer Betriebsleitzentrale.

Beim Eisenbahnverkehr ist es bereits üblich, dass eine Kommunikationsverbindung zwischen einem Schienenfahrzeug und einer Betriebsleitzentrale existiert. Die Betriebsleitzentrale kann sich z. B. in einem Bahnhof oder auch in einem Stellwerk befinden. Für die Kommunikation stehen mehrere Funksysteme zur Verfügung. Bisher war die Kommunikation zwischen einem Schienenfahrzeug und der Betriebsleitzentrale hauptsächlich darauf gerichtet, dass ein reibungsloser Eisenbahnverkehr stattfinden konnte. Zusätzliche Daten, wie z. B. Sitzplatzreservierungen, konnten nur in beschränktem Umfang übermittelt werden. Falls durch einen Defekt die Funkverbindung zwischen dem Schienenfahrzeug und der Betriebsleitzentrale ausfiel, konnte bisher eine Störung des gesamten Betriebsablaufes auftreten.

Der Erfindung liegt die Aufgabe zugrunde, ein Verfahren zur Übertragung von Daten anzugeben, das zumindest zeitweilig zusätzliche Datenmengen, die nicht unmittelbar mit dem sicheren Ablauf des Eisenbahnverkehrs zusammenhängen, zu übertragen gestattet. Mit einer Weiterbildung des Verfahrens soll gewährleistet sein, dass selbst dann, wenn die momentane Funkverbindung ausfällt, trotzdem ein weiterer, zuverlässiger Betrieb der Eisenbahn möglich ist.

Die Aufgabe, zusätzliche Datenmengen zumindest zeitweilig bewältigen zu können, wird mit den Merkmalen des unabhängigen Anspruchs 1 gelöst.

Damit wird der Vorteil erzielt, dass ein möglicherweise vorhandener breitbandiger Übertragungsweg sofort erkannt und auch genutzt wird. Es können dann in der Bedeutung nachgeordnete Daten über diesen breitbandigen Übertragungsweg sofort zwischen dem Schienenfahrzeug und der Betriebsleitzentrale ausgetauscht werden.

Die zusätzlichen Daten können z. B. die Eigendiagnose des Schienenfahrzeuges betreffen, die Sitzplatzreservierung aktualisieren oder Daten einer Internetverbindung sein, die auch elektronische Post umfasst.

Beilspielsweise wird auf Grund der Art der zu übertragenden Daten eine Prioritätsliste für die Reihenfolge der Übertragungen festgelegt. Falls nur eine geringe Datenmenge übertragen werden kann, werden nur die wichtigsten Daten berücksichtigt. Sobald ein breitbandiger Übertragungsweg zur Verfügung steht, werden dann automatisch die in der Prioritätsliste nachgeordneten Daten übertragen.

Eine mögliche Prioritätsliste kann an erster Stelle Zugsicherungsdaten, dann Passagiernotrufe, dann andere Betriebsdaten, dann Positionsdaten und schließlich die restlichen Daten vorsehen.

Mit einer solchen Prioritätsliste wird der Vorteil erzielt, dass die wesentlichen Daten auch dann, wenn kein breitbandiger Übertragungsweg zur Verfügung steht, übertragen werden.

Nach einer besonderen Weiterbildung des Verfahrens wird die ergänzende Aufgabe, selbst dann, wenn die momentane Funkverbindung ausfällt, trotzdem einen weiteren, zuverlässigen Betrieb der Eisenbahn zu ermöglichen, dadurch gelöst, dass dann, wenn ein Übertragungsweg ausfällt, automatisch ein anderer Übertragungsweg aktiviert wird.

Damit wird der Vorteil erzielt, dass nicht nach einer Alternative für einen nicht funktionierenden Übertragungsweg gesucht werden muss. Es sind folglich kaum noch Störungen aufgrund fehlender Übertragungswege möglich.

Für die Übertragung von Daten wird als erster Schritt die Art der zu übertragenden Daten ermittelt. Als zweiter Schritt werden die für diese Datenart geeigneten Übertragungswege ermittelt. Als dritter Schritt wird dann nacheinander über diese einzelnen Übertragungswege die Erreichbarkeit eines Empfängers ermittelt. Sobald ein Übertragungsweg gefunden ist, über den der Empfänger erreichbar ist, werden als vierter Schritt die Daten über diesen aktuellen Übertragungsweg übertragen. Falls jedoch der Empfänger über keinen der zuvor ermittelten Übertragungswege erreichbar ist, wird mindestens ein neuer Übertragungsweg ermittelt. Mit diesem Übertragungsweg wird dann genauso wie mit den zuvor ermittelten Übertragungswegen verfahren. Wenn ein Übertragungsweg ermittelt worden ist, über den der Empfänger erreichbar ist, werden die Daten übertragen.

Es wird der Vorteil erzielt, dass stets der am besten geeignete funktionsfähige Übertragungsweg gefunden wird. Dadurch ist eine optimale Datenübertragung zwischen einem Schienenfahrzeug und einer Betriebsleitzentrale gewährleistet.

Beispielsweise wird die Anzahl der Übertragungswege, für die nacheinander die Erreichbarkeit des Empfängers ermittelt worden ist, gezählt. Damit kann dokumentiert werden, wie groß die Anzahl der Versuche für einen Verbindungsaufbau war, um dadurch einen Hinweis auf die Zuverlässigkeit des Verfahrens zu bekommen .

Beispielsweise erfolgt bei Erreichen einer vorgegebenen Anzahl kein weiterer Übertragungsversuch und es wird eine Fehlermeldung abgegeben. Dadurch ist es möglich, die Suche nach einem geeigneten Übertragungsweg zeitlich zu begrenzen.

Es wird erkannt, ob in mehreren Übertragungswegen gleichzeitig ein Fehler auftritt.

Mit dem Verfahren zur Übertragung von Daten nach der Erfindung wird insbesondere der Vorteil erzielt, dass große Datenmengen in zuverlässiger Weise zwischen einem Schienenfahrzeug und einer Betriebsleitzentrale übertragen werden können.

## Patentansprüche

1. Verfahren zur Übertragung von Daten, insbesondere zwischen einem Schienenfahrzeug und einer Betriebsleitzentrale, wobei für die Zeitspanne, in der ein breitbandiger Übertragungsweg zur Verfügung steht, automatisch dieser Übertragungsweg aktiviert und der bisherige Übertragungsweg deaktiviert wird und wobei sonst die Art der zu übertragenden Daten ermittelt wird und die für diese Datenart geeigneten Übertragungswege ermittelt werden, **dadurch gekennzeichnet, dass** nacheinander über die einzelnen Übertragungswege die Erreichbarkeit eines Empfängers ermittelt wird, dass, sobald ein Übertragungsweg gefunden ist, über den der Empfänger erreichbar ist, die Daten über diesen aktuellen Übertragungsweg übertragen werden und dass, falls der Empfänger über keinen der zuvor ermittelten Übertragungswege erreichbar ist, mindestens ein neuer Übertragungsweg ermittelt und dann wie mit den zuvor ermittelten Übertragungswegen verfahren wird.

2. Verfahren nach Anspruch 1, **dadurch gekennzeichnet, dass** auf Grund der Art der zu übertragenden Daten eine Prioritätsliste für die Reihenfolge der Übertragungen festgelegt wird.

3. Verfahren nach einem der Ansprüche 1 oder 2, **dadurch gekennzeichnet, dass** dann, wenn ein Übertragungsweg ausfällt, automatisch ein anderer Übertragungsweg aktiviert wird.

4. Verfahren nach einem der Ansprüche 1 bis 3, **dadurch gekennzeichnet, dass** die Anzahl der Übertragungswege; für die nacheinander die Erreichbarkeit des Empfängers ermittelt wird, gezählt wird.

5. Verfahren nach Anspruch 4, **dadurch gekennzeichnet, dass** bei Erreichen einer vorgegebenen Anzahl kein weiterer Übertragungsversuch erfolgt und eine Fehlermeldung abgegeben wird.

## Claims

1. Method for transmitting data, particularly between a rail vehicle and an operational control center, wherein, for the period of time in which a broadband transmission path is available, this transmission path is automatically activated and the previous transmission path is deactivated, and wherein, otherwise, the type of data to be transmitted is ascertained, and the transmission paths suitable for this type of data are ascertained, **characterized in that** the individual transmission paths are successively used to ascertain the availability of a receiver, **in that**, as soon as a transmission path is found via which the receiver is available, the data are transmitted via this current transmission path, and **in that**, if the receiver is not available via any of the previously ascertained transmission paths, at least one new transmission path is ascertained and then the process is conducted as with the previously ascertained transmission paths.

2. Method according to Claim 1, **characterized in that** the type of data to be transmitted is taken as a basis for stipulating a priority list for the order of the transmissions.

3. Method according to one of Claims 1 and 2, **characterized in that,** when one transmission path fails, another transmission path is automatically activated.

4. Method according to one of Claims 1 to 3, **characterized in that** the number of transmission paths for which the availability of the receiver is successively ascertained is counted.

5. Method according to Claim 4, **characterized in that,** when a prescribed number is reached, no further transmission attempt is made and an error message is sent.

## Revendications

1. Procédé de transmission de données, notamment entre un véhicule ferroviaire et un poste central de commandement, dans lequel pendant le laps de temps pendant lequel on dispose d'une voie de transmission à bande large, on active automatiquement cette voie de transmission et on désactive la voie de transmission en vigueur jusqu'ici et dans lequel on détermine sinon le type des données à transmettre et on détermine les voies de transmission appropriées à ce type de données, **caractérisé en ce que,** dès que l'on détermine successivement la possibilité d'atteindre un récepteur par les voies de transmission individuelle, **en ce que** l'on a trouvé une voie de transmission par laquelle le récepteur peut être atteint, on transmet les données par cette voie de transmission et **en ce que**, si le récepteur ne peut être atteint par aucune des voies de transmission déterminées auparavant, on détermine au moins une nouvelle voie de transmission et on procède ensuite comme avec les voies de transmission déterminées auparavant.

2. Procédé suivant la revendication 1, **caractérisé en ce que** l'on fixe, sur la base du type des données à transmettre, une liste de priorité pour la succession des transmissions.

3. Procédé suivant l'une des revendications 1 ou 2, **caractérisé en ce que,** lorsqu'une voie de transmission est défaillante, on active automatiquement une autre voie de transmission.

4. Procédé suivant l'une des revendications 1 à 3, **caractérisé en ce que** l'on compte le nombre des voies de transmission pour lesquelles on a déterminé successivement la possibilité d'atteindre le récepteur.

5. Procédé suivant la revendication 4, **caractérisé en ce que,** lorsque l'on atteint un nombre prescrit, on n'effectue pas d'autres essais de transmission et on émet un message de défaut.
